# EUROPEAN PATENT SPECIFICATION

(11) **EP 2 496 019 B1**
(45) Date of publication and mention of the grant of the patent: **16.07.2014**
(21) Application number: 11305210.4
(22) Date of filing: 28.02.2011
(51) Int. Cl.: H04W 36/22, H04W 92/22

(54) **Mobility management of a mobile device through several radio networks of different technologies**
Mobilitätsmanagement eines tragbaren Geräts durch mehrere Funknetze mit unterschiedlichen Technologien
Gestion de la mobilité d'un dispositif mobile via plusieurs réseaux radio de différentes technologies

(43) Date of publication of application: 05.09.2012
(73) Proprietor: Alcatel Lucent, 92100 Boulogne Billancourt (FR)
(72) Inventor: Moquet, Pierrick, 78141, VELIZY (FR)
(74) Representative: Therias, Philippe

(56) References cited:
- EP-A1- 1 058 473
- GB-A- 2 427 788
- HUAWEI ET AL: "Cell Load Information Exchange between different RATs", 3GPP DRAFT; R3-091103 CELL LOAD INF IRATS REV0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090429, 29 April 2009 (2009-04-29), XP050341476, [retrieved on 2009-04-29]

## Description

### FIELD OF THE INVENTION

The invention relates to the field of wireless phone networks and, more specifically, to improve the communication between base station having different technologies.

### BACKGROUND OF THE INVENTION

A RAT (Radio Access Technologies) comprises radio transmitters intended to communicate with a great number of Mobile Equipment (or ME). These transmitters establish radio connections of cell level towards these mobiles, each cell being controlled by a node. Each node can manage 1,3,200,400,600,... 1000, 2000 cells. Several RAT of the different type can cover the same zone, for example: if the RAT is a GERAN of Global System Mobility technology (2G/GSM), the radio controller is called "Base Controller station" (BSC), if the RAT is an UTRAN of Universal Mobile Telephone System technology (3G/UMTS), the radio controller is called Radio Network Controller (RNC), and if the RAT is a eUTRAN (evolved UTRAN) used in Long Term Evolution technology (4G/LTE), the radio controller is a eNodeB. It is not necessary that the antennas of each RAT are established at the same places, in the same way the size of the coverage area of each RAT can vary considerably from certain type of RAT to another.

A mobile equipment (ME), when connected, is permanently in communication with a serving node. While moving, the ME changes cell, and can also change technology if it is equipped with means of radio communication associated with others technologies. With this manner, if a ME crosses a zone which is not covered by technology with which it communicates at the present time but which is covered by another technology, the serving node requires of ME to change its radio parameters in order to communicate with a node managed by this other technology.

When the serving node decides to make change node the ME, for example to make an handover, the serving node selects a certain number of radio identifier of cells candidates and requests the ME to make measurement on these cells candidates. If a cell candidate is strongly loaded by communications, the quality of the connection is likely not to correspond to the user's whishes, and the communication may be drop when the ME is connected with it.

To solve this problem, the serving node may take into account the load of the cells it controls and try to equitably distribute the load between them. Load information exchange is mono cell oriented with mono reporting node (i.e. there is no load information refresh). What requires knowing the load information of all the cells managed by the same node. For that, the node has to regularly request the whole of the cells to send their load information. For this reason, a great number of exchanges are required which occupies an important bandwidth.

The document GB 2 427 788 - SAMSUNG discloses a method of inter-mode handover for a mobile telecommunications system. A second cell being located within a first cell, the second cell transmits a beacon signal on a broadcast channel used by the first cell. When a user terminal moves from the first cell to the second cell the access point of the first cell determines if a handover should take place. The determination takes into account information from the access point of the second cell.

### SUMMARY OF THE INVENTION

In a first aspect of the invention, a method for managing mobility of a mobile device located within an area covered by a plurality of communication technologies able to communicate with this mobile device is provided according to features of claim 1.

With this manner, the mobile device is triggered to start measuring pilot signals when the change of technology can improve the communication with the network, and not at all time, thereby reducing the consumed power for the mobile device and saving processing time for the measurements. Moreover, the invention allows in particular to minimize the exchanges between the nodes and the cells, and to improve the handover of a cell to another. According to the technology, the serving node is a Base Controller station, or a Radio Network Controller, or an eNodeB.

With this manner; it is not useful to request the information from the whole of the cells, a little number of cells for collecting the information are sufficient

According to a variant, the given criterion is the load of cells. According to another variant, the given criterion is the ability of the cells to provide a determined service. With this manner, the serving node can select a node of another technology to improve the communication according to a specific criterion. According to an improvement, the serving node decide to trigger an handover over said communication session towards another node of different technology, the other node of different technology being better for the communication.

According to an improvement, the retrieving of information relative to at least one given criterion uses RAN Information Management messages specified by 3GPP. With this manner the exchanges Inter-RAT make easier. According to an improvement, the exchanges between the serving node and the mobile device arise when the mobile device is in idle mode.

In another aspect of the invention, a radio controller managing mobility of a mobile device located within an area covered by a plurality of communication technologies able to communicate with this mobile device is provided according to features of claim 7.

### BRIEF DESCRIPTION OF THE DRAWINGS

The teachings of the present invention can be readily understood by considering the following detailed description in conjunction with the accompanying drawings, in which:
- FIG. 1 depicts a high-level block diagram of a communication network;
- FIG. 2 depicts a high-level block diagram of a node configuration computer communicating with nodes of different technologies;
- FIG. 3 depicts a high-level block diagram of a general-purpose computer suitable for configuration the representative cells located in a determined area;
- FIG. 4 depicts a high-level block diagram of a general-purpose computer suitable for use in requesting the ME to measure selected frequencies;
- FIG. 5 shows a process flow chart of an example process for an exemplary embodiment at the mobile packet processing side.

### DETAILED DESCRIPTION OF THE INVENTION

For clarity and simplicity, the present specification shall refer to structural and/or functional elements, entities and/or facilities, relevant standards, protocols and/or services, and other components that are commonly known in the art without further detailed explanation as to their configuration or operation except to the extent they have been modified or altered in accordance with and/or to accommodate the preferred embodiment(s) presented herein.

The invention applies when the area is covered by different RAT, so that the ME can without changing place to move from a technology to another, while maintaining an active communication. When the serving node decides that the ME has to change of RAT, the serving node selects a certain number of radio identifier of cells candidates. The choice of the cell candidate is carried out according to several criteria. For example, if a cell candidate for a handover is strongly loaded by communications, the quality of the connection is likely not to correspond to the QoS (Quality of Service) expectations, and the communication is likely to be drop. The serving node thus excludes it from the potential candidates.

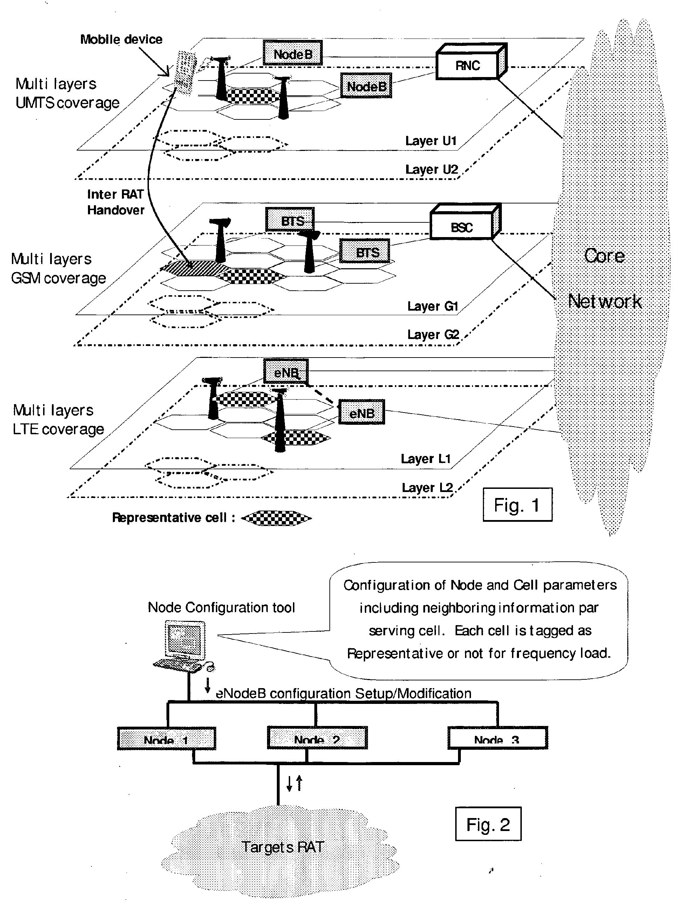

As depicted in FIG. 1, several RATS may occupy a given geographical area divided into cell which may be a macrocell, a picocell, a microcell,.... The RAT can be a GERAN of technology 2G/GSM where the radio controller is called Base Controller station (BSC), an UTRAN of technology 3G/UMTS where the radio controller is called Radio Network Controller (RNC), and a eUTRAN (evolved UTRAN) used in the technology Long Term Evolution (LTE) where the radio controller is an eNodeB. In the suit of the document, one will indicate that a cell is close to that communicating with the ME when this cell has an coverage area covering the current location of the ME and that this cell emits with a different frequency (i.e. the two cells are associated with the same RAT) and possibly with a different technology (i.e. the two cells are associated with RAT different).

Each node configures for each serving cell a set of neighboring cells par RAT and per frequency. For example, an eNodeB manages few serving cells (typically 3 eUTRAN cells or more) and based on operators requirement each eUTRAN may have :
- 32 UTRAN cells per UTRAN frequency (16 frequencies at the maximum)
- 32 GERAN cells per GERAN frequency (16 frequencies at the maximum)
- 48 eUTRAN cells per neighboring eUTRAN frequency (8 neighboring frequencies at the maximum)

Each RAT may comprise one or more layers according to the capacity. Each layer is associated with a set of frequencies Downlink and Uplink in the same band. Each RAT knows the presence of other RAT on its coverage area and the load information are exchanged between nodes of different technology. To exchange load information inter RAT, technology 3GPP proposes specific messages. 3GPP rel9 extended the use of RIM (RAN Information Management) procedure to exchange load information between RAT, but the definition does not optimize the flow of load information exchanged. The exchange of load information is a critical task due to the potential number of messages and processing in each node (source and target). Moreover, the load information has to be often updated, which generates many exchanges between the node and the cells.

The arrow shown in the figure 1 represents the change of RAT of a ME, for example passing from technology UMTS to GSM. The serving node is currently the node in communication with the ME : a BSC (technology 2G/GSM), a RNC ( technology 3G/UMTS or an eNodeB (technology 4G/LTE). The information exchanges with RNC and BSC pass through the Core Network (CN), but in technology 4G/LTE, EnodeBs can communicate between them and exchange parameters without the CN. In all the cases, the serving node takes the decision to change the ME of RAT, according to a specific criterion, such as the load information. The load concept cell oriented is extended to a load concept frequency par area oriented. For each serving node, a subset of neighboring cells is identified as representative cells for target load estimation. It reduces the number of cells involves in the load exchange process. It is done per target frequency. The measurement of representative cell according to a predetermined criterion is used to define the values of the neighboring cells according to the same predetermined criterion. The choice of the representative cell is made at the Operation And Management (OAM) level. For example, a neighboring cell at frequency Fx is considered not loaded if at least the load of the representative cell of frequency Fx is not high.

Figure 2 shows the links between the "node configuration tool", and the various nodes ("Node 1", Node 2", Node 3") controlling the neighboring RAT of different technologies. Each node controls a set of cells covering a given area. The tool "node configuration tool" allows an operator associating the frequencies with the various nodes, and defining which the representative cells are. This information is sent to the various nodes "Node 1", Node 2", Node 3". With this manner, each node owns its proper list of neighboring cells with the associated frequencies. Each node manages the updating of the load information. Each node receives load information of the neighboring nodes and compare with its own value of load in the case of a criterion of mobility based on load balancing (If its load is higher than that of a nearby node, it decides to transmit to the mobile device the frequency of this close node so that it measures it, for possible handover on this close node).

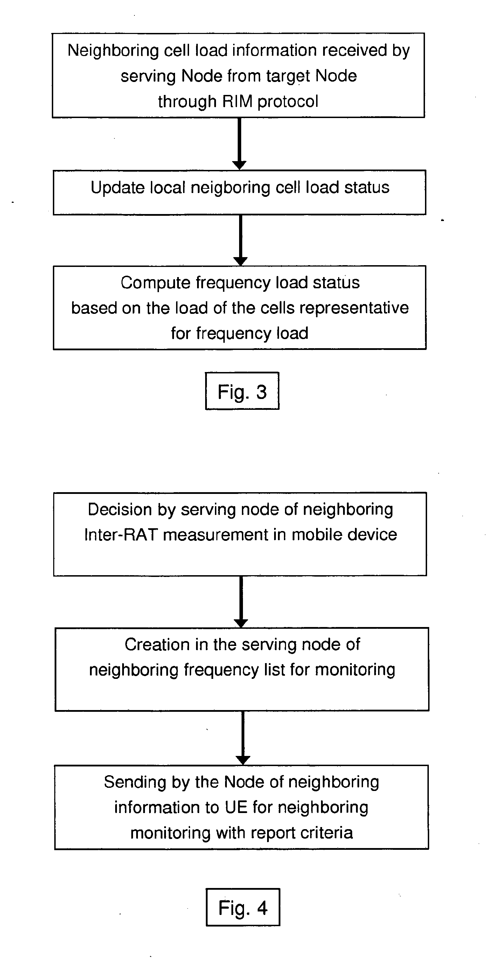

Figure 3 depicts part of the operations carried out by the serving node to obtain the loads values of the representative cells. The exchanges between nodes are carried out using the protocol RIM defined in the standard 3GPP. The loads of the cells of the same layer and for a micro given zone operated by the same serving node are quasi identical, i.e. the loads of close cells generally have close values. Let us take an example with an eNodeB managing three cells given (C1, C2, C3), C1 and C2 can have same neighboring UTRAN or GERAN. The load information of cell UTRAN or GERAN is used for determining the mobility of a ME from a cell (C1, C2, C3) towards the UTRAN or the GERAN. With this manner, the load of cell UTRAN or GERAN with one or more eNodeB so is better distributed between various cells (i.e. different RAT). Load Information is communicated between the RATs for example: a RNC and an eNodeB, a BSC and an eNodeB, or a RNC and a BSC. By only communicating the load values of the representative cells, the number of messages INTER-RAT is reduced

Figure 4 depicts the operations of the serving node when it decides that a ME has to change cell. According to the current location of the ME, the serving node requests the neighboring cells to transmit the load of representative cells.

By applying a selection of load criterion, the serving node selects only the no-loaded frequencies. But, other criterion may be used for the selection. The serving node may use information on the neighboring cells such as:
- information of loads,
- operator,
- service offered,
- operating condition,...

The selection criteria may also be the quality of the radio or a service providing. For example, the serving node uses information coming from the other nodes to select a neighboring cell which is both not very loaded and associated with the same operator (or an operator allowed communicating with it). After the selection, the serving node researches the frequency of each selected neighboring cell. The node then sends to the ME one or more radio frequencies with optionally the list of cell ID to measure in order to check if the ME is in the environment of the selected frequencies and optionally cells. The ME returns measurements in the form of a Report. This procedure of measurement consuming of energy and the Central Processing Unit (CPU) resources for the ME, and certain ME having only one radio operator receiver making it possible to measure only one technology at the same time, it may be required only at the time when the associated node (eNodeB, RNC or BSC) considers that the ME has to change cell. With this manner, the number of frequencies to be measured by the ME is reduced and the measurements by the ME are triggered at the good time. The number of measurements being reduced, that makes it possible to save the consumption of the battery and less to use the CPU of the ME, this one may then be devoted to other tasks. The emission of a report is started according to two modes: periodic mode or event mode.

In periodic mode, the report is transmitted to the serving node, for example every second. The serving node applies a radio criterion to the measures gone up to validate a decision of mobility and to select a target cell.

In event mode, radio measurement is carried out using thresholds of radio detection, i.e. the ME sends to its serving node the measurement of a cell only if on one radio criterion which may apply to neighboring cell and possibly to the source cell. This criterion may be a relative criterion between cell source and neighboring cell, or an absolute criterion on neighboring cell and possibly on source cell. So that in this mode, the ME makes a selection among the monitored cells and indicates in the report only the cell(s) which correspond to the radio criterion.

With the reception of the report, the serving node selects a cell in the list transmitted by the ME according to a given criterion. This criterion may be for example the criterion of load of the representative cells.

Let us suppose that the cell communicating with a ME is in a zone covered by a UTRAN with 5 available frequencies, the serving node requests the EU to only scan the frequency of the UTRAN which appears the less loaded (and if the ME is equipped for scanning this frequency) and which corresponds to frequency of cells neighboring of the cell in communication with the ME. The load information is refreshed regularly using a timer of guard which starts the measurement of load.

The measurement of load is evaluated within a zone including several cells of which one or one subset is considered as representative. With this manner, the load value of the cells inside the zone is considered equal to the load value of the representative cell or the subset of cells. According to a basic embodiment, the serving node preferably selects the cell which has the best radio conditions but other criteria are possible according to the present invention, such as allowed LAC/TAC and/or PLMN.

The function "Operating And Maintenance" (OAM) makes it possible the sending of information to the node (and vice versa). OAM functions make it possible to configure and maintain the equipments of the network. The load information from the representative cell may be transmitted using a parameter OAM. The operator may define that a cell (or possibly a subset of cells) inter RAT given is representative to identify the value of load of a zone given for one to a given layer (i.e. frequency) of this RAT. The node has then to recover the information of load of this cell (or subset of cells) located on another RAT.

The operator determines the representative cells by observing their activities: the number of neighboring cells, the quantity of exchanged data, and the number of mobilities measured into each cell,.... This information is already available in order to make sure of the good performance of the network.

According to an improvement, the load information may be used to manage the mobility of the MEs in Idle mode. With this manner, when the ME is in idle mode, the network may filter or favor frequencies having less loaded cells by configuring relevant mobility parameters in System Information broadcasted in each cell and used by ME to drive its mobility . When the user launches a connection, the Quality of Service (QoS) is better.

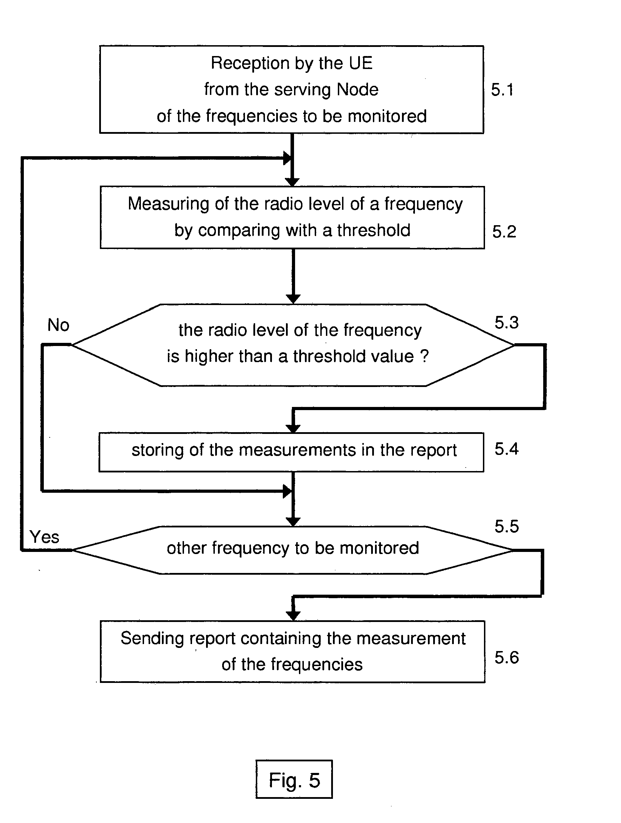

Figure 5 presents a flow chart of the operations carried out by the ME when the serving node asks it to make measurements. The process of measurements reporting is specific to the supplier of ME and the standard of technology.

The figure 5 is applicable only in 2G/GSM and 3G/UMTS technologies, but not in the case of the LTE where the report sent by the ME relates to only one frequency. For example in UMTS, a ME may measure several UMTS frequencies and send a single report containing the measured values. According to the LTE specification, the report cannot contain more than one measured values of a single frequency (whatever the technology). According to the used technology, the time of detection and measurement vary, what influences the frequencies scanned by the ME. The manufacturers may also determine the manner to carry out the processing of multi frequencies and multi technology measurements.

Thus, the frequencies to be measured transmitted by the node may depend on the characteristics of the ME. For example, a ME supporting technology UMTS can measure at least 3 frequencies UTRAN (including frequency UTRAN with which it communicates with its serving node). In this case, the serving node sends to the ME at more the three frequencies to measure. According to an improvement, the ME transmits to the serving node the characteristics of its measurements means, for example the ability of measuring more than three frequencies. In this case, the node adapts the measurements required according to the ability of the ME.

In step 5.1 of the flow chart of the figure 5, the ME receives from the serving node, the frequencies to be monitored. The ME scans a first frequency with comparing with threshold (step 5.2). At the step 5.3, if the radio level of the scanned frequency is higher than a threshold value, the measured value is stored in a report (step 5.4). If others frequencies have to be measured, in step 5.5 the program loops to the step 5.2. When all the frequencies selected by the serving node have been measured, the report containing the measurements of radio frequency is sent to the serving node (step 5.6).

It is to be appreciated that the particular system elements, process operations and other features of the illustrative embodiments described above are presented by way of example only. As indicated previously, the above-described techniques can be adapted in a straightforward manner for use in other types of wireless communication systems and with other types of communication technology. These and numerous other alternative embodiments within the scope of the appended claims will be readily apparent to those skilled in the art.

## Claims

1. A method for managing mobility of a mobile device (ME) located within an area covered by a plurality of communication technologies able to communicate with this mobile device, comprising a step of establishing a communication session between said mobile device and a given technology serving node being in communication with said mobile device, **characterized in that** the method further comprises the steps of:
- determining information relative to at least one given criterion by measurements performed at a cell representative of a determined set of cells operated by the same serving node, this representative cell being controlled by a node of another technology covering the zone where the mobile device is located,
- retrieving by the serving node of information relative to at least the given criterion applied on each cell of the area,
- selection of at least one frequency among the frequencies used by said other nodes according to the retrieved information, the selected frequency having a higher criterion value than the criterion value of the frequency used by the serving node, and transmission to the mobile device of the at least one selected frequency,
- triggering said mobile device to start measuring signals of the at least one selected frequency,
- transmission by the mobile device of a report containing measurements performed on at least one selected frequency.

2. A method according to claim 1, **characterized in that** the given criterion is the load of cells.

3. A method according to claim 1, **characterized in that** the given criterion is the ability of the cells to provide a determined service.

4. A method according to any of claims 1 to 3, **characterized in that** it comprises the step of handing over said communication session towards another node of different technology operating one of the selected frequencies.

5. A method according to any of claim 1 to 4, **characterized in that** the retrieving of information relative to at least one given criterion uses RAN Information Management messages specified by 3GPP.

6. A method according to claim 1, **characterized in that** the exchanges between the serving node and the mobile device arise when the mobile device is in idle mode.

7. A radio controller managing mobility of a mobile device (ME) located within an area covered by a plurality of communication technologies able to communicate with this mobile device, and configured to:
- determine information relative to at least one given criterion by measurements performed at a cell representative of a determined set of cells operated by the same serving node, this representative cell being controlled by a node of another technology covering the zone where the mobile device is located,
- retrieve information relative to at least the given criterion applied on each cell of the area,
- select at least one frequency among the frequencies used by said other nodes according to the retrieved information, the selected frequency having a higher criterion value than the criterion value of the frequency,
- send to the mobile device of the at least one selected frequency and trigger said mobile device to start measuring signals of the at least one selected frequency,
- receive from the mobile device of a report containing measurements performed on at least one selected frequency.

8. A radio controller according to claim 7, **characterized in that** the given criterion is the load of cells.

9. A radio controller according to claim 7, **characterized in that** the given criterion is the ability of the cells to provide a determined service.

10. A radio controller according to any of claims 7 to 9, **characterized in that** the radio controller triggers an handing over of said communication session towards another node of different technology operating one of the selected frequencies.

11. A radio controller according to any of claims 7 to 10, **characterized in that** the retrieving of information relative to at least one given criterion uses RAN Information Management messages specified by 3GPP.

12. A radio controller according to any of claims 7 to 11, **characterized in that**, according to the technology, the serving node is a Base Controler station, or a Radio Network Controller, or an eNodeB.

## Patentansprüche

1. Verfahren zur Verwaltung der Mobilität eines sich innerhalb eines von einer Vielzahl von für die Kommunikation mit diesem Mobilgerät geeigneten Kommunikationstechniken versorgten Bereichs aufhaltenden Mobilgeräts (ME), umfassend den Schritt des Aufbauens einer Kommunikationssitzung zwischen dem besagten Mobilgerät und einem bedienenden Knoten einer gegebenen Technik, welcher mit dem besagten Mobilgerät in Verbindung steht, **dadurch gekennzeichnet, dass** das Verfahren weiterhin die folgenden Schritte umfasst:
- Ermitteln von Informationen in Bezug auf mindestens ein gegebenes Kriterium durch an einer für einen bestimmten Satz von von demselben bedienenden Knoten betriebenen Zellen repräsentativen Zelle durchgeführten Messungen, wobei diese repräsentative Zelle von einem Knoten einer anderen Technik, welcher die Zone, in der sich das Mobilgerät befindet, versorgt, gesteuert wird,
- Abrufen, durch den bedienenden Knoten, von Informationen in Bezug auf zumindest das gegebene auf jede Zelle des Bereichs angewendete Kriterium ,
- Auswählen mindestens einer Frequenz unter den von dem besagten anderen Knoten genutzten Frequenzen gemäß den abgerufenen Informationen, wobei der Wert des Kriteriums der ausgewählten Frequenz höher ist als der Wert des Kriteriums der von dem bedienenden Knoten genutzten Frequenz, und Übertragen der mindestens einen ausgewählten Frequenz an das Mobilgerät,
- Triggern des besagten Mobilgeräts, um das Messen von Signalen der mindestens einen ausgewählten Frequenz zu starten,
- Übertragen, durch das Mobilgerät, eines Berichtes, welcher die auf mindestens einer ausgewählten Frequenz durchgeführten Meßwerte enthalt

2. Verfahren nach Anspruch 1, **dadurch gekennzeichnet, dass** das gegebene Kriterium die Last von Zellen ist.

3. Verfahren nach Anspruch 1, **dadurch gekennzeichnet, dass** das gegebene Kriterium die Fähigkeit der Zellen, einen bestimmten Dienst bereitzustellen, ist.

4. Verfahren nach einem beliebigen der Ansprüche 1 bis 3, **dadurch gekennzeichnet, dass** es den Schritt des Weiterreichens der besagten Kommunikationssitzung an einen anderen Knoten unterschiedlicher Technik, welcher eine der ausgewählten Frequenzen betreibt, umfasst.

5. Verfahren nach einem beliebigen der Ansprüche 1 bis 4, **dadurch gekennzeichnet, dass** das Abrufen von Informationen in Bezug auf mindestens ein gegebenes Kriterium unter Verwendung von durch 3GPP spezifizierten RAN-Informationsverwaltungsnachrichten verfolgt.

6. Verfahren nach Anspruch 1, **dadurch gekennzeichnet, dass** die Austausche zwischen dem bedienenden Knoten und dem Mobilgerät erfolgten, wenn sich das Mobilgerät im Ruhemodus befindet.

7. Funksteuereinrichtung, welche die Mobilität eines sich innerhalb eines von einer Vielzahl von für die Kommunikation mit diesem Mobilgerät geeigneten Kommunikationstechniken versorgten Bereichs aufhaltenden Mobilgeräts (ME) verwaltet und für das Durchführen der folgenden Schritte konfiguriert ist:
- Ermitteln von Informationen in Bezug auf mindestens ein gegebenes Kriterium durch an einer für einen bestimmten Satz von von demselben bedienenden Knoten betriebenen Zellen repräsentativen Zelle durchgeführten Messungen, wobei diese repräsentative Zelle von einem Knoten einer anderen Technik, welcher die Zone, in der sich das Mobilgerät befindet, versorgt, gesteuert wird,
- Abrufen von Informationen in Bezug auf zumindest das gegebene auf jede Zelle des Bereichs angewendete Kriterium ,
- Auswählen mindestens einer Frequenz unter den von dem besagten anderen Knoten genutzten Frequenzen gemäß den abgerufenen Informationen, wobei der Wert des Kriteriums der ausgewählten Frequenz höher ist als der Wert des Kriteriums der Frequenz,
- Senden der mindestens einen ausgewählten Frequenz an das Mobilgerät, und Triggern des besagten Mobilgeräts, um das Messen von Signalen der mindestens einen ausgewählten Frequenz zu starten,
- Empfangen eines Berichtes, welcher die auf mindestens einer ausgewählten Frequenz durchgeführten Messwerte enthält, von dem Mobilgerät.

8. Funksteuereinrichtung nach Anspruch 7, **dadurch gekennzeichnet, dass** das gegebene Kriterium die Last von Zellen ist.

9. Funksteuereinrichtung nach Anspruch 7, **dadurch gekennzeichnet, dass** das gegebene Kriterium die Fähigkeit der Zellen, einen bestimmten Dienst bereitzustellen, ist.

10. Funksteuereinrichtung nach einem beliebigen der Ansprüche 7 bis 9, **dadurch gekennzeichnet, dass** die Funksteuereinrichtung das Weiterreichen der besagten Kommunikationssitzung an einen anderen Knoten unterschiedlicher Technik, welcher eine der ausgewählten Frequenzen betreibt, auslöst.

11. Funksteuereinrichtung nach einem beliebigen der Ansprüche 7 bis 10, **dadurch gekennzeichnet, dass** das Abrufen von Informationen in Bezug auf mindestens ein gegebenes Kriterium unter Verwendung von durch 3GPP spezifizierten RAN-Informationsverwaltungsnachrichten erfolgt.

12. Funksteuereinrichtung nach einem beliebigen der Ansprüche 7 bis 11, **dadurch gekennzeichnet, dass** der bedienende Knoten entsprechend der Technik eine Basissteuerstation, oder eine Funknetzwerk-Steuereinrichtung, oder ein eNodeB ist.

## Revendications

1. Procédé de gestion de mobilité d'un dispositif mobile (ME) situé à l'intérieur d'une zone couverte par une pluralité de technologies de communication pouvant communiquer avec ce dispositif mobile, comprenant une étape d'établissement d'une session de communication entre ledit dispositif mobile et un noeud de desserte d'une technologie donnée en communication avec ledit dispositif mobile, **caractérisé en ce que** le procédé comprend en outre les étapes suivantes :
- déterminer des informations relatives à au moins un critère donné par des mesures effectuées au niveau d'une cellule représentative d'un ensemble déterminé de cellules exploitées par le même noeud de desserte, cette cellule représentative étant contrôlée par un noeud d'une autre technologie couvrant la zone où le dispositif mobile est situé,
- récupérer au moyen du noeud de desserte des informations relatives au moins au critère donné appliqué sur chaque cellule de la zone,
- sélection d'au moins une fréquence parmi les fréquences utilisées par lesdits autres noeuds conformément aux informations récupérées, la fréquence sélectionnée ayant une valeur de critère supérieure à la valeur de critère de la fréquence utilisée par le noeud de desserte, et transmission au dispositif mobile de l'au moins une fréquence sélectionnée,
- déclencheur ledit dispositif mobile pour commencer la mesure de signaux de l'au moins une fréquence sélectionnée,
- transmission par le dispositif mobile d'un rapport contenant des mesures effectuées sur au moins une fréquence sélectionnée.

2. Procédé selon la revendication 1, **caractérisé en ce que** le critère donné est la charge de cellules.

3. Procédé selon la revendication 1, **caractérisé en ce que** le critère donné est la capacité des cellules à fournir un service déterminé.

4. Procédé selon l'une quelconque des revendications 1 à 3, **caractérisé en ce qu'**il comprend l'étape de transfert de ladite session de communication vers un autre noeuds de technologie différente exploitant une des fréquences sélectionnées.

5. Procédé selon l'une quelconque des revendications 1à 4, **caractérisé en ce que** la récupération des informations relatives à au moins un critère donné utilise des messages de gestion d'informations de réseau RAN spécifiés par 3GPP.

6. Procédé selon la revendication 1, **caractérisé en ce que** les échanges entre le noeud de desserte et le dispositif mobile se produisent lorsque le dispositif mobile est en mode repos.

7. Contrôleur radio gérant la mobilité d'un dispositif mobile (ME) situé à l'intérieur d'une zone couverte par une pluralité de technologies de communication pouvant communiquer avec ce dispositif mobile, et configuré pour :
- déterminer des informations relatives à au moins un critère donné par des mesures effectuées au niveau d'une cellule représentative d'un ensemble déterminé de cellules exploitées par le même noeuds de desserte, cette cellule représentative étant contrôlée par un noeud d'une autre technologie couvrant la zone où le dispositif mobile est situé,
- récupérer des informations relatives au moins au critère donné appliqué sur chaque cellule de la zone,
- sélectionner au moins une fréquence parmi les fréquences utilisées par lesdits autres noeuds conformément aux informations récupérées, la fréquence sélectionnée ayant une valeur de critère supérieure à la valeur de critère de la fréquence,
- envoyer au dispositif mobile l'au moins une fréquence sélectionnée et déclencheur ledit dispositif mobile pour commencer la mesure de signaux de l'au moins une fréquence sélectionnée,
- recevoir à partir du dispositif mobile un rapport contenant des mesures effectuées sur au moins une fréquence sélectionnée.

8. Contrôleur radio selon la revendication 7, **caractérisé en ce que** le critère donné est la charge de cellules.

9. Contrôleur radio selon la revendication 7, **caractérisé en ce que** le critère donné est la capacité des cellules à fournir un service déterminé.

10. Contrôleur radio selon l'une quelconque des revendications 7 à 9, **caractérisé en ce que** le contrôleur radio déclenche un transfert de ladite session de communication vers un autre noeuds de technologie différente exploitant une des fréquences sélectionnées.

11. Contrôleur radio selon l'une quelconque des revendications 7 à 10, **caractérisé en ce que** la récupération des informations relatives à au moins un critère donné utilise des messages de gestion d'informations de réseau RAN spécifiés par 3GAP.

12. Contrôleur radio selon l'une quelconque des revendications 7 à 11, **caractérisé en ce que**, conformément à la technologie, le noeuds de desserte est une station de contrôleur de base, ou un contrôleur de réseau radio ou un eNodeB.
